# EUROPEAN PATENT SPECIFICATION

(11) **EP 0 724 472 B1**
(45) Date of publication and mention of the grant of the patent: **10.09.1997**
(21) Application number: 93924386.1
(22) Date of filing: 20.10.1993
(51) Int. Cl.: B01D 27/00, B01D 27/06

(54) **FILTER WITH MOLDED END CAP**
FILTER MIT GEFORMTER ENDKAPPE
FILTRE A COUVERCLE TERMINAL MOULE

(43) Date of publication of application: 07.08.1996
(73) Proprietor: AlliedSignal Inc., Morristown, New Jersey 07962-2245 (US)
(72) Inventor: MARTIN, James, William, Rehoboth, ME 012769 (US); KESAVAN, Sunil, K., Troy, MI 48084 (US); COTE, Edmond, Hector, Jr., Warren, RI 02885 (US)
(74) Representative: Allen, William Guy Fairfax
(86) International application number: US9310060
(87) International publication number: WO9511071

(56) References cited:
- WO-A-90/15654
- FR-A- 2 075 771
- GB-A- 2 134 811

## Description

This invention relates to liquid filters for filtering the lubricating oil of an internal combustion engine, but it may also be applicable to other types of filters, such as fuel filters and filters used for filtering the combustion air of an internal combustion engine.

Liquid filters for filtering lubricating oil of an internal combustion engine consist of a metal housing with a filter element within the housing. The filter element commonly consists of a circumferentially extending cylindrical array of pleated filter paper. The ends of the filter element are sealed by a sealant commonly known commercially as Plastisol, which is dispensed upon paper or metal end caps in a manner shown in FR-A-2075771. Manufacture of these filter elements presently requires a great deal of hand labor. Commonly, the Plastisol sealant is dispensed upon one of the end caps, the operator then gathers the array of pleated filtering paper and installs it in the Plastisol. The subassembly is then inverted by hand, and a similar process is repeated to apply the opposite end cap to the opposite end of the array of pleated filtering paper. The Plastisol must be then thermally cured.

More recently, in order to speed up production lines, use of an ultraviolet cured sealant has been proposed in US-A-5,028,330. This document discloses a filter element comprising the circumferentially extending filter media formed into a substantially cylindrical, annular shape having a pair of opposite ends defined by the ends of the cylinder, a centre tube inscribing the inner circumference of said cylinder formed by said media, first and second end cap assemblies for closing and sealing corresponding ends of the media, each of said first and second of said end cap assemblies comprising a cup shaped, resilient, substantially rigid annular member with an opening about an axis and with a trough circumferentially extending around said opening for receiving a corresponding end of said media, a circumferentially extending band of a photo-initiated polymer dispensed in said trough and sealing engaging a corresponding end of the media when said end is received in said trough to provide a seal between the end of the media and the cup shaped annular member.

The ultraviolet cured material is relatively expensive as compared to inexpensive prior art Plastisol compounds. Accordingly, it is desirable to minimize use of such expensive compounds.

The present invention uses a contoured, molded, end cap which defines a trough into which the sealant compound is dispensed. The trough contains the compound, thereby minimizing the amount required, and also replaces the mold required to form the ultraviolet compound in the prior art device, as the end cap itself acts as the mold. The end cap, according to the present invention, is made of a material which has sufficient resiliency to deflect axiall and exert a biasing force against the end of the force the sealant into the media such that a uniform seal developed when the sealant is later cured by transmitting light through the end cap. Again, the quantity of the sealant is minimal.

This and other advantages of the present invention will become apparent from the following description, with reference to the accompanying drawings, in which:
Figure 1 is a cross-sectional view of an oil filter assembly incorporating a liquid filter made according to the teachings of the prior art;
Figure 2 is a view, partly in section, of a filter element used in the liquid filter of Figure 1, with the parts thereof shown in their relative positions just before the end of the filter element is forced into the end cap;
Figure 3 is a view similar to Figure 2, but illustrating the completed filter element assembly; and
Figure 4 is a perspective view of the end cap used in the filter element illustrated in Figures 2-3,

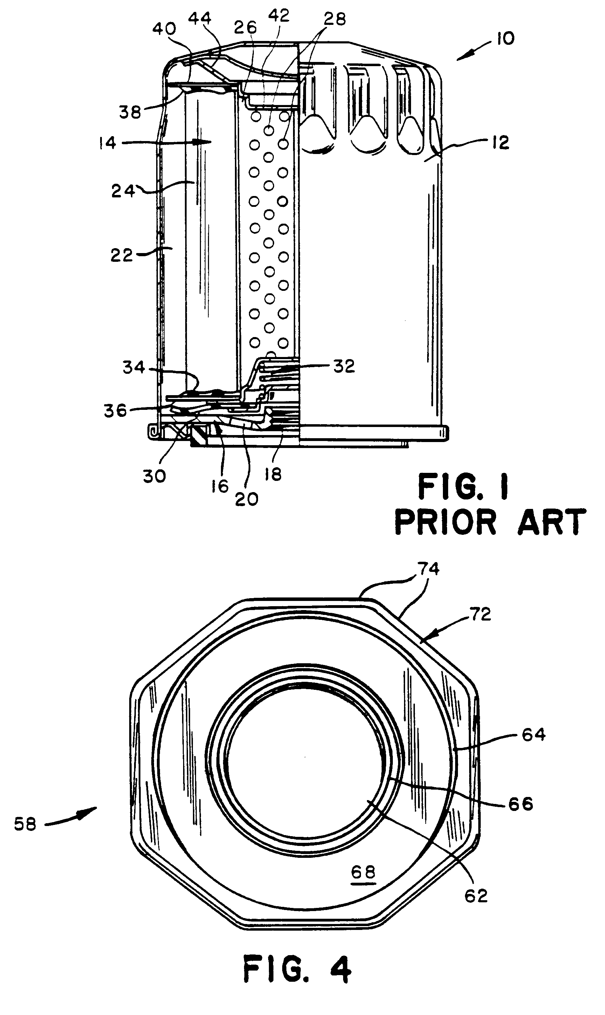

Referring now to the drawings, a conventional spin-on engine lubricating oil filter is illustrated at 10 in Figure 1. The filter 10 includes a metal can-shaped housing 12 which defines a cavity therein which receives a filter element generally indicated by the numeral 14. The open end of the metal housing 12 is closed by a tapping plate 16. Tapping plate 16 includes a threaded outlet opening 18, which is adapted to be threaded on a mounting stud (not shown) on a mounting surface of the vehicle engine. Tapping plate 16 further includes circumferentially spaced inlet openings 20 which permit lubricating oil to communicate into an inlet chamber 22 defined between the housing 12 and the outer tips of a conventional cylindrical array of pleated filter paper 24. Inward collapse of the pleated paper array 24 is resisted by a metallic perforated centertube 26 which circumscribes the inner tips of the pleats comprising the array 24. The centertube 26 is substantially cylindrical and defines an outlet chamber communicating with the outlet opening 18. The perforations of the centertube are illustrated as at 28. An anti-drainback valve 30, which prevents lubricating oil from draining out of the chamber 22 back through the inlet openings 16 when the engine is turned off, and a bypass valve generally indicated by the numeral 32, which permits lubricating oil to bypass around the filter element 14 when the pressure across the element 14 reaches an excessive level, is also provided.

The lower end, (viewing Figure 1) of the array 24 is sealed by a circumferentially extending band of Plastisol generally indicated by the numeral 34 which is carried on a substantially flat, annular end cap 36. The outer periphery of end cap 36 engages the wall of the housing 12 to properly orient the filter element 14 within the housing 12. The upper end of the array 24 is sealed by Plastisol generally indicated by the numeral 38 which is dispensed upon an upper end cap 40 which, like the lower end cap 36, is an annular, substantially flat, paper which extends from the centertube 28 radially outwardly across the top of the array 24. The top of the centertube 26 is sealed by a centertube cap 42 of conventional design which incorporates a leaf spring 44 which engages the end of the housing 12, thereby loading the filter element downwardly, viewing the Figure.

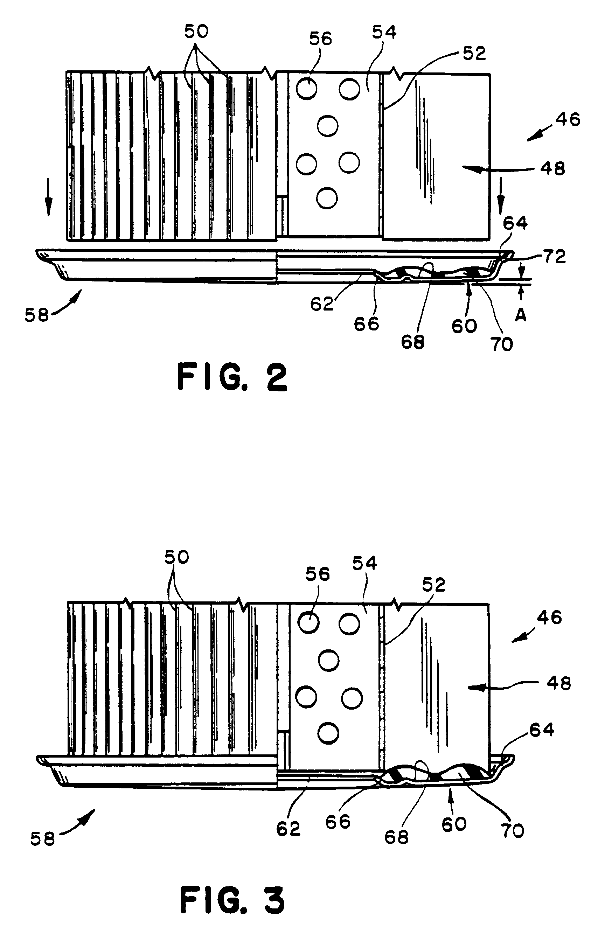

Referring now to Figures 2-4, a filter element 46 is made according to the invention and replaces the filter element 14 of Figure 1. Filter element 46, as does filter element 14, consists of a circumferentially extending, cylindrical array of radially tapering pleats generally indicated at 48. Each of the pleats tapers radially from an outer tip 50 to corresponding inner tips 52. A metallic centertube 54 includes perforations as at 56 and extends circumferentially about the inner tips 52 and resists inward collapse of the array 48.

The ends of the array 48 are sealed by an end cap assembly indicated by the numeral 58. End cap assembly 58 consists of a resilient, substantially rigid annular cup-shaped member generally indicated by the numeral 60. The cup-shaped member 60 circumscribes an opening 62 which is coaxial with the centertube 54. The cup-shaped member 60 extends between a circumferentially extending, axially projecting outer lip 64 and a circumferentially extending, axially tapering inner lip 66. Lips 64, 66 cooperate with one another to define a circumferentially extending trough 68 therebetween. A circumferentially extending band of sealant material, generally indicated by the numeral 70, is dispensed into the trough 68. The sealant material 70 is a polymer material that is cured by ultraviolet radiation. The ultraviolet compound is commercially available from several sources, and may be Ciba-Geigy compound XMH-8744. This compound is substantially clear, and cures in a time period of 2-3 seconds when exposed to ultraviolet light.

The trough 68 is wide enough to receive the entire width of the array 48 and also wide enough to receive the centertube 54, such that the sealing compound 70 seals the end of the pleats and also seals the centertube against the end of the pleats and against the end cap assembly 58. It will also be noted that the cup-shaped member 60 tapers in the axial direction from the opening 62 toward the outer lip 64 by an angle represented by the angle A in Figure 2. The cup-shaped member 60 is sufficiently resilient that it is deflectable axially through the angle A as the array 48 and centertube 54 are installed into the trough 68, so that the resiliency of the cup-shaped member 60 loads the sealant into the pleats as the cup-shaped member 60 is deflected through the angle A as the array 48 and centertube 54 are installed into the trough 68 by urging the array 48 and centertube 54 downwardly, viewing Figure 2. This can be accomplished by, for example, grasping the array and forcing it downwardly, either manually or by using a assembly equipment such as a dial index machine including grasping arms that grasp the array and force it downward, as disclosed in the above-mentioned US-A-5,028,330. The outer circumferential edge 72, which projects radially outwardly from the lip 64, terminates in flats 74 which properly orient the filter element 46 when it is installed in the metal housing 12. The cup-shaped member 60 consists of a randomly distributed, non-woven array of fibers and a binder resin and is manufactured by conventional paper making processes well known to those skilled in the art. The bulk of the fibers, to minimize cost, are normally cellulose fibers, but at least some of the fibers are desirably synthetic fibers, such as polyester fibers, or inorganic fibers, such as glass fibers, in order to give tensile and flex fatigue strength and to also give resiliency and formability. It is also necessary to use a binder resin such as a phenolic, latex, acrylic, epoxy, or polyvinyl alcohol. A typical material would comprise from 50-90% cellulose fibers, 5-20% synthetic fibers, with the remainder resin. The resin provides flexibility to the article, to permit the trough to be formed by molding or other forming processes. If a Plastisol sealant is to be used, the fiber mixture and resin can be chosen to minimize cost. However, if an ultraviolet cured polymer is used as a sealant, the resin and fiber mixture must be carefully chosen, since each resin and fiber absorbs, reflects, and transmits radiation at different frequencies. It has been found that polyvinyl alcohol resin transmits a substantially greater percentage of the ultraviolet wavelengths and is the preferred resin if an ultraviolet initiated polymer is to be used as a sealant. Suitable materials are available from the Custom Papers Group of James River Corporation. All percentages given in the aforegoing discussion are percentages by weight. The end cap is made transparent to ultraviolet light if an ultraviolet cured sealant is used so that the photo-initiated polymer can be cured by transmitting ultraviolet light through the end cap. Ideally, the filter element is manufactured as described in the above-referenced US-A-5,028,330, where the end cap assembly 58 is carried on glass trays to permit ultraviolet light to be transmitted through the tray and the end cap to cure the sealant.

## Claims

1. Filter element (46) comprising a circumferentially extending filtering media (48) formed into a substantially cylindrical, annular shape having a pair of opposite ends defined by the ends of the cylinder, a centertube (54) circumscribing the inner circumference of said cylinder formed by said media (48), first and second end cap assemblies (58) for closing and sealing corresponding ends of the media, each of said first and second of said end cap assemblies (58) comprising a cup-shaped, resilient, substantially rigid annular member (60) with an opening (62) about an axis and with a trough (68) circumferentially extending around said opening (62) for receiving a corresponding end of said media (48), a circumferentially extending band of a photo-initiated polymer (70) dispensed in said trough (68) and sealingly engaging a corresponding end of the media (48) when said end is received in said trough (68) to provide a seal between the end of the media (48) and the cup-shaped annular member (60), characterized in that each cup-shaped annular member (60) is made of a mixture of cellulose fibers and synthetic and/or inorganic fibers and a binder resin such that said cup-shaped annular member (60) has a resultant resiliency to deflect axially and exert a biasing force against the end of said media to force said polymer (70) into said media (48), said mixture being transparent to light so that said polymer (70) can be cured after the annular member (60) is forced against the end of said media by transmitting light through the cup-shaped annular member (60) to develop said seal.

2. Filter element (46) as claimed in claim 1 further characterized in that said resin is polyvinyl alcohol.

3. Filter element (46) as claimed in claim 1 further characterized in that said pleats taper between inner tips (50) and outer tips (52), said inner tips (50) defining said inner circumference for said annular array of said media (48), said centertube (54) being located in said trough (68) to support said array and engage said polymer (70) to seal media (48) with said cup shaped annular member (60).

## Patentansprüche

1. Filterelement (46), das folgendes aufweist: ein sich in Umfangsrichtung erstreckendes filterndes Medium (48), das zu einer im wesentlichen zylindrischen, ringförmigen Form ausgebildet ist und ein Paar entgegengesetzte, von den Enden des Zylinders festgelegte Enden aufweist, ein Mittelrohr (54), das den Innenumfang des von dem Medium (48) ausgebildeten Zylinders umschreibt, erste und zweite Endkappenbaugruppen (58) zum Schließen und Abdichten entsprechender Enden des Mediums, wobei sowohl die erste als auch die zweite der Endkappenbaugruppen (58) ein schalenförmiges, elastisches, im wesentlichen steifes ringförmiges Glied (60) mit einer Öffnung (62) um eine Achse und mit einer sich umfangsmäßig um die Öffnung (62) erstreckenden Wanne (68) zum Empfangen eines entsprechenden Endes des Mediums (48) aufweist, ein sich in Umfangsrichtung erstreckendes Band aus einem photoinitiierten Polymer (70), das in der Wanne (68) ausgegeben ist und ein entsprechendes Ende des Mediums (48) bei Empfang des Endes in der Wanne (68) abdichtend in Eingriff nimmt, um eine Abdichtung zwischen dem Ende des Mediums (48) und dem schalenförmigen ringförmigen Glied (60) bereitzustellen, dadurch gekennzeichnet, daß jedes schalenförmige ringförmige Glied (60) aus einer Mischung aus Zellulosefasern und synthetischen und/oder anorganischen Fasern und einem Bindeharz derart hergestellt ist, daß das schalenförmige ringförmige Glied (60) eine resultierende Elastizität aufweist, so daß es axial ausgelenkt werden kann und gegen das Ende des Mediums eine Vorspannkraft ausüben kann, um das Polymer (70) in das Medium (48) zu drücken, wobei die Mischung Licht durchläßt, so daß das Polymer (70) nach dem Drücken des ringförmigen Glieds (60) gegen das Ende des Mediums gehärtet werden kann, indem Licht durch das schalenförmige ringförmige Glied (60) geleitet wird, wodurch die Abdichtung entwickelt wird.

2. Filterelement (46) nach Anspruch 1, weiterhin dadurch gekennzeichnet, daß es sich bei dem Harz um Polyvinylalkohol handelt.

3. Filterelement (46) nach Anspruch 1, weiterhin dadurch gekennzeichnet, daß sich die Falten zwischen inneren Spitzen (50) und äußeren Spitzen (52) verjüngen, wobei die inneren Spitzen (50) den Innenumfang für die ringförmige Anordnung des Mediums (48) festlegen, wobei das Mittelrohr (54) in der Wanne (68) angeordnet ist, um die Anordnung zu stützen und das Polymer (70) in Eingriff zu nehmen, so daß das Medium (48) mit dem schalenförmigen ringförmigen Glied (60) dicht verbunden ist.

## Revendications

1. Elément de filtre (46) comprenant un milieu filtrant (48) s'étendant circonférentiellement, formé avec une forme annulaire substantiellement cylindrique, ayant une paire d'extrémités opposées définies par les extrémités du cylindre, un tube central (54) entourant la circonférence interne dudit cylindre formé par ledit milieu (48), des premier et deuxième assemblages de couvercle d'extrémité (58) pour fermer et sceller les extrémités correspondantes du milieu, chacun desdits premier et deuxième desdits assemblages de couvercle d'extrémité (58) comprenant un organe annulaire (60) substantiellement rigide, élastique, en forme de coupelle, avec une ouverture (62) autour d'un axe et avec un bac (68) s'étendant circonférentiellement autour de ladite ouverture (62) pour recevoir une extrémité correspondante dudit milieu (48), une bande s'étendant circonférentiellement d'un polymère photoamorcé (70) disposée dans ledit bac (68) et engageant de manière étanche une extrémité correspondante du milieu (48) lorsque ladite extrémité est reçue dans ledit bac (68) pour fournir un joint entre l'extrémité du milieu (48) et l'organe annulaire en forme de coupelle (60), caractérisé en ce que chaque organe annulaire en forme de coupelle (60) est fabriqué avec un mélange de fibres de cellulose et de fibres synthétiques et/ou inorganiques et un liant résineux de sorte que ledit organe annulaire en forme de coupelle (60) ait une élasticité résultante telle qu'il fléchisse axialement et exerce une force de poussée contre l'extrémité dudit milieu pour forcer ledit polymère (70) dans ledit milieu (48), ledit mélange étant transparent à la lumière de sorte que ledit polymère (70) puisse être durci après que l'organe annulaire (60) a été forcé contre l'extrémité dudit milieu en transmettant de la lumière à travers l'organe annulaire en forme de coupelle (60) pour développer ledit joint.

2. Elément de filtre (46) selon la revendication 1, caractérisé en outre en ce que ladite résine est de l'alcool polyvinylique.

3. Elément de filtre (46) selon la revendication 1, caractérisé en outre en ce que lesdits plis s'amincissent entre les pointes internes (50) et les pointes externes (52), lesdites pointes internes (50) définissant ladite circonférence interne pour ledit ensemble annulaire dudit milieu (48), ledit tube central (54) étant situé dans ledit bac (68) pour supporter ledit ensemble et engager ledit polymère (70) pour sceller le milieu (48) avec ledit organe annulaire en forme de coupelle (60).
